(19) Europäisches Patentamt / European Patent Office / Office européen des brevets

(11) **EP 3 826 170 A1**

(12) **EUROPEAN PATENT APPLICATION**

(43) Date of publication:
**26.05.2021 Bulletin 2021/21**

(51) Int Cl.:
*H02P 29/024* (2016.01)    *H02P 21/04* (2006.01)
*H02P 21/24* (2016.01)

(21) Application number: **19210709.2**

(22) Date of filing: **21.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Melexis Technologies NV**
**3980 Tessenderlo (BE)**

(72) Inventor: **MOONS, Marnix**
**2450 Meerhout (BE)**

(74) Representative: **DenK iP bv**
**Leuvensesteenweg 203**
**3190 Boortmeerbeek (BE)**

(54) **STALL DETECTION IN SINE WAVE DRIVEN MOTORS**

(57) A stall detector (110) for detecting stall of a brushless DC motor (120) which is adapted for applying one or more driving signals such that currents through the one or more coils of the brushless DC motor are generating a flux for driving the motor. The stall detector comprises: a processing device (111) adapted for determining a direct lead angle between a back EMF voltage vector generated by the motor and a current vector which represents the flux generated by the currents through the one or more coils; the processing device (111), moreover, is adapted for determining that the motor is stalling when the direct lead angle exceeds at least one predefined threshold at least once.

**FIG. 1**

EP 3 826 170 A1

**Description**

**Field of the invention**

The invention relates to the field of multi-coil brushless DC motors. More specifically it relates to the field of detecting stall of multi-coil brushless DC motors.

**Background of the invention**

Brushless direct current (BLDC) motor electronics are designed to support silent sensorless motor drive, for cost and noise reasons. However, without a position sensor, a reliable way of motor stall detection is essential to operate these motors reliably in all conditions.

Stalls of sensorless BLDC motors can be detected by checking the motor current increase when the BEMF (back electromotive force) voltage, which is proportional with the speed, is dropping. The motor current oscillation may be monitored since the rotor may resonate after a torque shock (e.g. when hitting an end-position)

At high speed, stall can be detected by monitoring the current and by comparing it with a threshold. If a stall occurs, then the current goes beyond the threshold and an overcurrent is detected. If, for example, one of the phase currents goes above 150% of the normal operating current, then stall is detected.

At lower speeds, however, overcurrent detection is not possible because of the limited current and BEMF at lower speeds.

There is therefore a need for a method and/or a motor controller which can detect stall at lower rotor speeds than is the case when only doing overcurrent detection of the phase currents for detecting stall.

**Summary of the invention**

It is an object of embodiments of the present invention to provide a good system and method to detect stall of multi-coil sinusoidally controlled BLDC motors. In embodiments of the present invention the motor is driven in closed-loop sine mode. In embodiments of the present invention the motor may be a stepper motor.

The above objective is accomplished by a method and device according to the present invention.

In a first aspect embodiments of the present invention relate to a stall detector for detecting stall of a brushless DC motor. The brushless DC motor is adapted for applying one or more driving signals such that currents through the one or more coils of the brushless DC motor are generating a flux for driving the motor.

The stall detector comprises a processing device adapted for determining a direct lead angle between a back EMF voltage vector generated by the motor and a current vector which represents the flux generated by the currents through the one or more coils. The processing device is, moreover, adapted for determining that the motor is stalling when the direct lead angle exceeds at least one predefined threshold at least once.

It is an advantage of embodiments of the present invention that stall can be detected even at lower rotor speeds than it is the case when only overcurrent detection of the phase current is done for detecting stall.

It is an advantage of embodiments of the present invention that false positives due to torque shocks are avoided. This is achieved by using the direct lead angle as stall indicator.

In embodiments of the present invention the at least one predefined threshold may be selected such that it is exceeded by the lead angle when motor stall occurs, and this during for example at least 80% or even 90% of the measurements. In embodiments of the present invention the at least one predefined threshold may be selected such that it is not, or only during a limited amount of measurements (e.g. less than 5%, or even less than 2% of the measurements, or even not at all), exceeded when a torque shock occurs.

In embodiments of the present invention the stall detector comprises a current detector adapted for obtaining the current vector.

In embodiments of the present invention the current vector may be expressed in an axis system with at least 2 axes.

In embodiments of the present invention the stall detector comprises a voltage detector which is adapted for obtaining a voltage vector.

In embodiments of the present invention the voltage vector may be expressed in the same axis system as the axis system of the current vector.

In embodiments of the present invention at least two predefined thresholds are defined as the thresholds of a predefined operation region.

In embodiments of the present invention the predefined operation region may be defined by a Direct-Lead-Angle (DLA)target value and a tolerance value. Thus the predefined thresholds are the DLA-target value +/- the tolerance value.

In embodiments of the present invention at least one predefined threshold may for example be in a range between +80° and +100° and another predefined threshold is in a range between -80° and -100°.

A positive threshold is exceeded when the value of the direct lead angle is larger than the value of the threshold. A negative threshold is exceeded when the absolute value of a negative direct lead angle is larger than the absolute value of the negative threshold.

In embodiments of the present invention the current detector comprises a current measurement means for determining the current through the one or more coils and is adapted for determining the current vector from the measured current.

The current measurement means may for example be a shunt resistor or a hall sensor.

In embodiments of the present invention the processing device is adapted for determining stall only after a predefined period after starting the brushless DC-motor.

It is an advantage of embodiments of the present invention that false detections in the beginning of start-up due to a too small BEMF voltage are avoided.

In embodiments of the present invention the stall detector comprises an interface for signaling that the motor is stalled.

The interface may be a hardware interface such as an output pin, or a communication interface. It is an advantage of embodiments of the present invention that a motor controller which is generating the driving signals can be signaled that the rotor is stalled. The stall detector may be integrated in the motor controller.

Embodiments of the present invention may relate to a motor system. The motor system comprises a controller, a bridge driver, a brushless DC motor, and a stall detector according to embodiments of the present invention. The controller is adapted for generating driving signals for controlling the bridge driver such that currents through the one or more coils of the brushless DC motor are generating a flux for driving the motor. Different current profiles may be generated. In embodiments of the present invention the controller may be adapted for controlling the bridge driver such that sinusoidal drive currents are generated through the one or more coils of the motor.

In embodiments of the present invention the brushless DC motor may be a multi-coil brushless DC motor.

In embodiments of the present invention the controller is adapted for generating pulse width modulated driving signals.

In embodiments of the present invention the stall detector is adapted for signaling to the controller that the motor is stalled.

It is an advantage of embodiments of the present invention that a signal can be send to the controller indicating that the motor is stalled as this allows the controller to adjust the driving of the motor.

In embodiments of the present invention the stall detector may be integrated in the controller.

In the next paragraphs two separate options are cited for stopping the motor. The invention is, however, not limited to these options.

In embodiments of the present invention the controller may be adapted for putting the bridge outputs to tri-state upon reception of a stall signal from the stall detector.

It is an advantage of embodiments of the present invention that driving of the motor is stopped as soon as stall is detected. By putting the bridge outputs in tri-state high currents through the coils are avoided.

In other embodiments of the present invention the controller may be adapted for setting all coils to a same predefined voltage potential. In embodiments of the present invention the predefined voltage potential may for example be the ground potential. It is an advantage of embodiments of the present invention that no flux is generated as soon as stall is detected. In embodiments of the present invention the predefined voltage potential may for example be the supply voltage.

In a second aspect embodiments of the present invention relate to a method for detecting stall of a brushless DC motor for which driving signals are applied such that currents through the one or more coils of the brushless DC motor are generating a flux for driving the motor.

The method comprises determining a direct lead angle between a back EMF voltage generated by the motor and a current vector which represents the flux generated by the currents through the one or more coils.

The method, moreover, comprises determining that the motor is stalling when the direct lead angle exceeds at least one predefined threshold at least once.

In embodiments of the present invention the method comprises obtaining the current vector and/or obtaining the voltage vector.

In embodiments of the present invention the current vector and/or the voltage vector are obtained by obtaining voltages over the coils and/or by measuring currents through the coils, and by projecting the currents and/or voltages onto an axis system with at least two axis.

In embodiments of the present invention the projection may be a Clarke transformation. This transformation may be followed by a Park transformation.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 shows a schematic drawing of a motor system in accordance with embodiments of the present invention.
FIG. 2 shows a flow chart of a method in accordance with embodiments of the present invention.
FIG. 3 shows vector representation of the currents through a 3-phase BLDC motor and two projection axes.
FIG. 4 shows a vector representation of the voltage in the same axis system as in FIG. 3.
FIG. 5 shows a vector diagram of a counterclockwise rotating rotor.
FIG. 6 shows a vector diagram of a counterclockwise rotating rotor with RI shifted to the center of the coordinate system.
FIG. 7 shows a mapping of the voltage vector in the current reference frame.
FIG. 8 shows a mapping of the BEMF voltage vector in the current reference frame.
FIG. 9 shows the result of the sensorless measurement of the direct lead angle of a running BLDC motor with noise on the current measurements and torque changes being applied on the motor, in accordance with embodiments of the present invention.
FIG. 10 shows the result of the sensorless measurement of the direct lead angle of a stalling BLDC motor, in accordance with embodiments of the present invention.

Any reference signs in the claims shall not be construed as limiting the scope. In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to the driving signals, reference is made to the signals which generate a current through the motor coils of the BLDC motor. The currents may be generated by an average voltage difference over the motor coils generated by a full bridge output driver 130. The driving signals may be pulse width modulated (PWM) signals, or linear controlled signals. The resulting currents through the coils are e.g. sinusoidal currents.

The average voltage difference over the coils is a means to produce the phase currents in the coils of the BLDC motor.

In a first aspect embodiments of the present invention relate to a stall detector 110 for detecting stall of a brushless DC motor 120 wherein driving signals are applied such that currents through the one or more coils of the brushless DC motor are generating a flux for driving the motor. The brushless DC motor may be a multi-coil brushless DC motor. The driving signals may be such that a sinusoidal current is flowing through the coils. A stall detector according to embodiments of the present invention is suitable for detecting stall of star as well as for delta constructed motors.

The stall detector comprises a processing device 111 adapted for determining a direct lead angle between a back EMF voltage generated by the motor and a current vector. In embodiments of the present invention this is the resistive current vector. The current vector represents the flux generated by the currents through the one or more coils of the brushless DC motor. The current vector may be expressed in an axis system which comprises at least two axis. The processing device 111 is adapted for determining that the motor is stalling when the direct lead angle exceeds at least one predefined threshold at least once. In embodiments of the present invention the back EMF voltage may be determined from the current vector and the voltage vector. The direct lead angle may be directly determined from the voltage vector and the current vector, if the phase resistance and inductance of the motor is known. In embodiments of the present invention the back EMF vector may be determined from the voltage vector and the current vector, and the direct lead angle may be determined from the back EMF vector and the current vector.

It is found by the inventor, by studying different parameters, that stall of BLDC motors can be detected by obtaining the direct lead-angle and by comparing it with one or more predefined thresholds. The algorithm may use a positive and/or a negative threshold for the comparison. The absolute value of these thresholds may be the same.

The motor may for example be driven in sine mode. For typical BLDC motors, the direct lead angle values are around 0° during sine drive, this is the optimal drive (most amount of torque for the used current, what is very energy efficient) wherein the phase current and the phase BEMF voltage are in sync to deliver the maximum motor power. For interior permanent magnet motors (IPM motors) for which the q-axis inductance ($L_q$) and the d-axis inductance ($L_d$) are different, the optimal lead angle can be negative to take into account the extra reluctance drive effect.

In embodiments of the present invention the processing device is adapted for determining that the motor is stalled when the direct lead angle exceeds at least one predefined threshold at least once. The predefined thresholds may be selected such that an angle tolerance region is defined. The tolerance region may for example be defined as: DLA-target $\pm$ Tolerance, wherein DLA-target is a target value for the direct lead angle (DLA) and Tolerance is the tolerance. Thus two predefined thresholds are defined.

In embodiments of the present invention stall may be detected if the actual monitored direct lead angle, or a filtered value of a series of monitored direct lead angles, is found outside the predefined thresholds. Digital filtering or post-processing may be done on the series of direct lead angles before comparing the result with the predefined thresholds.

In some embodiments of the present invention stall is determined after even 1 measurement outside the -90°: 90° range. Because of this range it can be ascertained that stall occurred. In some embodiments of the present invention a low pass filter may be used. In that case a smaller window, e.g. -60°: 60°, may be used. The low-pass filter, however, results in an increased delay and, hence, in a loss of positioning information. Depending on the application requirements with respect to the accuracy of the position information, the window for determining stall may be decreased or increased.

It is an advantage of embodiments of the present invention that by using the direct lead angle a more reliable detection of stall can be obtained than when using the indirect lead angle. When using the indirect lead angle the thresholds need to be changed when changing the speed and current of the motor. This is not required in embodiments of the present invention where the direct lead angle is used for the stall detection.

In an exemplary embodiment of the present invention the direct lead angle tolerance is between +90° and -90°. Thus a first predefined threshold is +90° and a second predefined threshold is -90°.

In embodiments of the present invention the stall detector may comprise a current detector 113 which is adapted for obtaining a current vector which represents the flux generated by the currents through the one or more coils of the brushless DC-motor and is expressed in an axis system which comprises at least two axis.

In embodiments of the present invention the stall detector may comprise a voltage detector 112 which is adapted for obtaining a voltage vector which represents the voltages over the one or more coils of the brushless DC-motor. The voltage vector may be expressed in the same axis system as the current vector. The voltages over the one or more coils are a means for producing the currents through the one or more coils which on its turn are generating the total flux. In embodiments of the present invention the voltage vector may be obtained from the supply voltage which is powering the motor. From the supply voltage and the known duty cycle on every phase, the voltage applied on every phase may be calculated. This result may be multiplied with a constant factor, which is dependent on the shape of the applied phase voltages (because the star point voltage is not equal to zero). The supply voltage may be measured or it may be obtained from the voltage supply.

In embodiments of the present invention one or more ADC units may be used for measuring the phase voltage of each phase. If only one ADC is used, it may be multiplexed to different channels. In a preferred embodiment the channels are sample and hold channels in order to ensure that voltage measurements are taken at one and the same time. If several ADCs are used the ADC measurements of the different channels are synchronized.

An example of how the direct lead angle can be obtained is elaborated in the following paragraphs. In a 3-phase motor, a current is running through each coil. These currents may be sinusoidally varying currents. Each current produces a flux and the sum of the fluxes results in a total flux.

The current vector can for example be obtained by measuring the current through a summation resistor 114. The voltage vector can be obtained by measuring the applied voltage or by retrieving the applied voltage from the controller who sets the applied voltage.

Instead of expressing the currents and fluxes for each coil separately they can also be represented in a two-axis system by doing a projection. Such a projection may for example be a Clarke transformation. When doing a Clarke transformation different parameters can be written in a vector representation. The Clarke transformation transforms the phases to a two dimensional a reference frame. In this example all parameters can be described as a vector referenced to the stator.

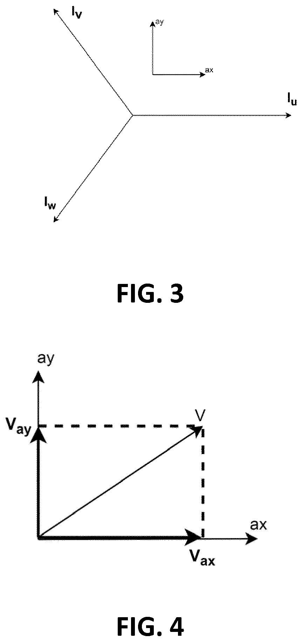

The current I, the back electromotive force (BEMF) B and applied voltage V of a BLDC motor on its 3 phases (U, V and W) can be transformed to a vector representation. This may be achieved by the Clarke transformation. FIG. 3 shows vector representations of the phase currents (Iu, Iv, Iw) and two projection axes (ax, and ay). FIG. 4 shows a vector representation of the voltage in the same axis system. The following conventions are used:

$$V = |V| \; ; I_{pk} = I = |I|; B = |B|$$

With V the voltage relative to the star point voltage.

For the current I, the vector's starting position is at (0,0) and its ending position (I_{x}, I_{y}) may be calculated as:

$$I_{ax} = I_U - \frac{I_V + I_W}{2} = \frac{3}{2} I_U$$

$$I_{ay} = \frac{\sqrt{3}}{2} (I_V - I_W)$$

In order to preserve the amplitude of the electrical variables, the obtained vectors may be multiplied with $^2/_3$:

$$I_\alpha = I_U$$

$$I_\beta = \frac{1}{\sqrt{3}} (I_V - I_W)$$

A Clarke transformation can be followed by a Park transformation. In case of a Park transformation the current vector is projected on a frame with an orthogonal axis which is rotating at the same speed as the current vector. Thus, two orthogonal constant components are obtained. The frame of the Park transformation is referenced to the rotor. The frame of the Park transformation may for example consist of a d-axis which is directed in the direction of the permanent magnet flux and a q-axis, orthogonal to the d-axis, in the direction of the BEMF voltage vector. The angle between the direct axis d and the axis ax is the rotator angle θ.

Mapping may be done using the following formulas:

$$I_d = I_\alpha \cos(\theta) + I_\beta \sin(\theta)$$

$$I_q = I_\beta \cos(\theta) - I_\alpha \sin(\theta)$$

The amplitude of the calculated vectors in the Clarke or Park reference frame are equal to the amplitude of the phase values in the 3 phase reference frame. These can (e.g. for the current) be obtained as follows:

$$I = \sqrt{I_\alpha{}^2 + I_\beta{}^2} = \sqrt{I_d{}^2 + I_q{}^2}$$

The Clarke transformation transforms all three phases to an orthogonal reference frame. Thus all parameters may for example be described as a vector referenced to the stator. Subsequently, the Park transformation transforms these vectors to a dynamic frame, referenced to the rotor.

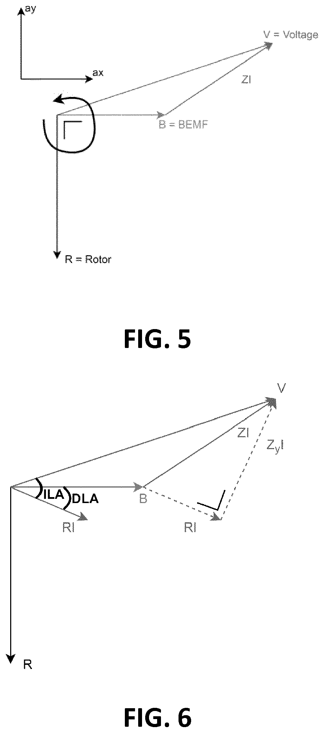

FIG. 5 shows a vector diagram wherein a rotor vector, a BEMF voltage vector orthogonal therewith, and a voltage vector which represents the voltage which is applied to the motor are shown. The voltage which is applied to the motor will result in a voltage drop ZI between the applied voltage vector and the BEMF voltage vector. The impedance Z thereby consists of the resistance and the inductance of the motor. In this example the rotor is rotating in anti-clockwise direction. The position of the rotor is given by the rotor vector R and the BEMF voltage vector is always 90° ahead of the rotor vector. The vectors can be described with an amplitude and an angle. Hence in the vector representation, it is possible to calculate angles between these vectors as shown in FIG. 6.

FIG. 6 shows that the voltage drop ZI consists of a real and an imaginary part which are orthogonal. In this example R is the resistance of 1 phase and $Z_y = L\omega j$ with L the inductance of 1 phase. In an example where the shunt is only resistive, the current measurement will only be resistive (real). The measured current is the total phase current, but since the configuration of the motor and drive is known, RI can be calculated. This figure shows a vector diagram with RI shifted to the center of the coordinate system. This way it is possible to see the angle between all different vectors.

Where in embodiments of the present invention reference is made to the Indirect Lead Angle (ILA) reference is made to the angle between the current vector I and the voltage vector V.

Where in embodiments of the present invention reference is made to the Direct Lead Angle (DLA) reference is made to the angle between the current I and back electromagnetic force B generated by the motor.

If the angle of the measured current vector and the BEMF voltage vector equals zero, then the most optimal drive is obtained for motors with Ld=Lq. When the current vector and the BEMF voltage vector are not completely aligned, this will result in a reduction in torque per current, that is delivered to the rotor, what is not energy efficient.

These angles give information about the state of the motor and can be used in a control algorithm to drive a BLDC motor and to detect stall events. All the described angles in this disclosure are electrical angles. The invention is, however, not limited thereto.

The cross product between the vectors I (the current vector) and V (the voltage vector) can be calculated in two ways.

$$I_{pk} V \cos(ILA) = I_\alpha V_\alpha + I_\beta V_\beta$$

$I_{pk}$ is the amplitude of the current vector and V is the amplitude of the voltage vector.

The same can be done for the inner product between two vectors I and V:

$$I_{pk} V \sin(ILA) = -I_\alpha V_\beta + I_\beta V_\alpha$$

The projections $V_\alpha$ and $V_\beta$ may for example be obtained from lookup tables. These lookup tables may for example be created for V=1. The retrieved values $V_\alpha$ and $V_\beta$ may be scaled for a different value of V. The lookup tables may be created for driving signals which are sine shaped voltages.

By a division of the above two formulas followed by an arctangent the ILA angle can be obtained as is illustrated in the formula below.

$$\tan(IV) = \frac{I_{pk}V\sin(ILA)}{I_{pk}V\cos(ILA)} = \frac{-I_\alpha V_\beta + I_\beta V_\alpha}{I_\alpha V_\alpha + I_\beta V_\beta}$$

In embodiments of the present invention the indirect lead angle may for example be calculated by making use of a lookup table. Such a lookup table may for example have a resolution of 1 degree. Depending on the application the resolution of the lookup table may be higher or lower. The invention is, however, not limited to a lookup table to obtain this arctangent. All kind of calculations or approximations may be used to obtain this arctangent.

The following formulas make use of sine and cosine operators. They may be implemented as lookup table to decrease the execution time.

Starting from the indirect lead angle and the applied voltage, the peak current can be calculated:

$$I_{pk} = \frac{I_{pk}V\cos(ILA)}{V\cos(ILA)} = \frac{I_\alpha V_\alpha + I_\beta V_\beta}{V\cos(ILA)}$$

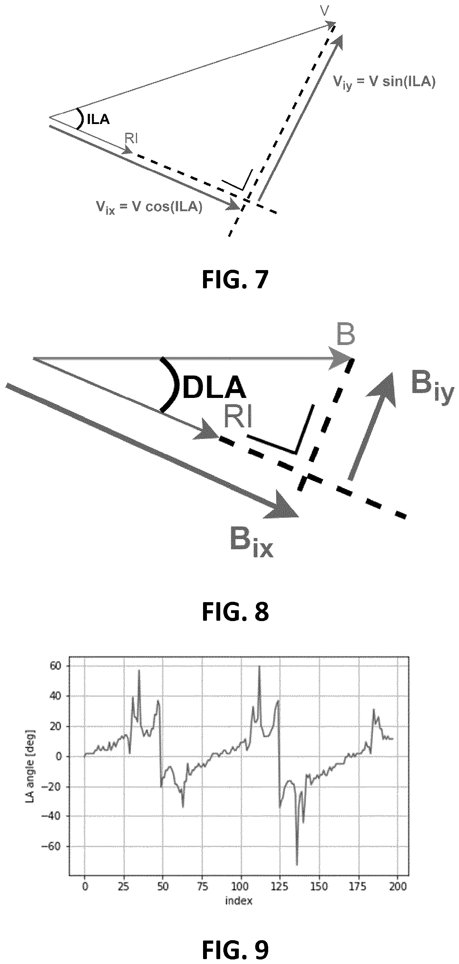

The mapping of the voltage in the current reference frame is illustrated in FIG. 7. Its coordinates can for example be calculated as follows:

$$V_{ix} = V\cos(IV)$$

$$V_{iy} = V\sin(IV)$$

The values of the BEMF in this axial system can be calculated, knowing that the difference between the voltage and BEMF vector equals the vector generated by the current going through the phases. This is illustrated in FIG. 5.

$$B_{ix} = V_{ix} - RI_{pk}$$

$$B_{iy} = V_{iy} - Z_y I_{pk}$$

$$Z_y = L\omega j$$

The resistance R and inductance L of the phases of the motor can be measured in advance. In a star configuration the voltages are all relative to the star point voltage. Between the star point and the phase connector is 1 phase, hence the resistance R and inductance L of the phases of the motor are used. In a delta configuration, equivalent motor phase values may be calculated.

Also the BEMF voltage vector can be mapped to the current axis as represented in FIG. 8. This formula shows the relationship between the DLA angle and the calculated BEMF-values.

$$\tan(DLA) = \frac{B_{iy}}{B_{ix}}$$

The motor has its best performance when this DLA angle equals zero. When DLA = 0, the least amount of current will be consumed. Notice that it is possible to reach even faster speeds, in a voltage limited application, but this point of fastest speed is not very stable in reality.

FIG. 9 shows the result of the sensorless measurement of the direct lead angle of a running BLDC motor with much noise on current measurements (small shunt with very small current), in accordance with embodiments of the present invention. This figure depicts an example with a plurality of torque shocks. It was noticed by the inventor that even with the increased noise level and with the presence of the torque shocks the lead angle remained between +90° and - 90°.

When the motor is stalling, the controller will increase the torque in order to avoid the stalling. It was noticed by the inventor that the DLA of the stalling motor in the exemplary embodiment of the present invention exceeds the +/- 90° thresholds. In this exemplary embodiment of the present invention the thresholds are +/- 90°. The invention is, however, not limited thereto. Depending on the motor different thresholds may be predefined.

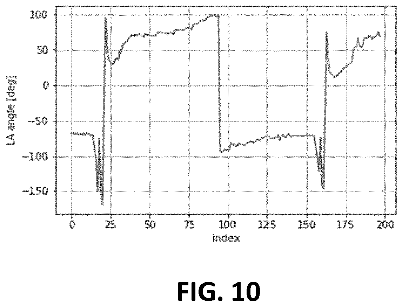

FIG. 10 displays a continuous increase of torque during sampling points 0-16, the lead angle controller 140 is still able to react to the torque changes here. Between sampling point 16 and 17, the lead angle controller 140 loses the rotor and will have delivered a negative torque. It is found by the inventor that if the absolute value of the DLA exceeds a predefined threshold (in this example +/- 90°) this is an indication of a stalling rotor. All the points thereafter are measurements of a stalled motor. It is noticed by the inventor that the absolute value of the DLA regularly exceeds the 90° limit, which makes it possible to detect a stall when the motor didn't start up correctly before going to closed loop field-oriented control. It is moreover an advantage of embodiments of the present invention that the predefined threshold can be selected such that peaks due to torque shocks do not exceed the threshold while peaks due to stalling are exceeding the threshold.

In the exemplary embodiment of the present invention, when the angle is below -90°, the torque that was applied during the previous 100 μs will be negative. This will make the stall even worse during that period. In that case the rotor position is lost and the motor driving needs to be stopped.

For these pictures the current was sampled every 100 μs. It is an advantage of embodiments of the present invention that even when the motor does not stall, the measured DLA stays inside a predefined tolerance region (e.g. the -90°:90° region).

In some embodiments of the present invention the stall detection is only enabled after a pre-defined time interval after start-up. The advantage thereof being that false detections in the beginning of start-up due to a too small BEMF voltage is avoided. It is an advantage of embodiments of the present invention that they can already effectively detect stall at speeds which are 5% of the maximum speed or higher.

In an exemplary embodiment of the present invention at least during the first 200ms or even during the first 300 ms, the stall detection is disabled. If something goes wrong it will in worst case be detected after 300ms.

After these 300ms, the motor will be stopped when the measured DLA exceeds the at least one predefined threshold (e.g. the -90°:90° region).

During the tests, of which the results are illustrated in FIG. 9 and FIG. 10, torque shocks and stalls were applied on the motor while it was running between 5% and 50% of the maximum speed. From these results it can be concluded that the detection method, according to embodiments of the present invention, is very robust against torque shocks and allows to determine stalls accurately.

In embodiments of the present invention the stall detection based on the DLA may be combined with stall detection based on the current amplitude. This was done in the exemplary embodiment of the present invention of which the test results are illustrated in FIG. 9 and FIG. 10. It was noticed by the inventor that, in the exemplary embodiment of the present invention, when the motor runs above 80% of the maximum speed, the stall detection based on current amplitude always gets triggered first.

The goal of this test was also to validate at which position the measured DLA exceeded the at least one predefined threshold (in the example the -90°:90° region), when a stall is always caused at the same position. The operation speed of the motor was about 10% of the maximum speed. After repeating this test a plurality of times, the measured stall position had a variation of about +/-5 degrees which corresponds with +/-1.5%.

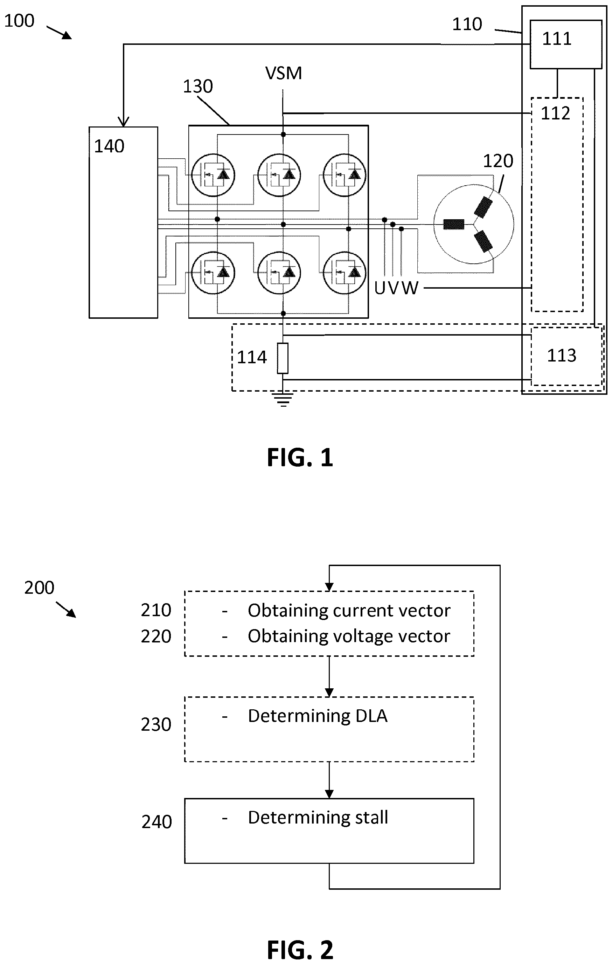

Embodiments of the present invention may also relate to a motor system 100 which comprises a stall detector 110 in accordance with embodiments of the present invention. Such a motor system is schematically illustrated in FIG. 1. It additionally comprises a controller 140, a bridge driver 130, and a multi-coil brushless DC motor 120. The controller 140 is adapted for generating driving signals for controlling the bridge driver 130 such that sinusoidal drive currents are generated through the coils of the motor 120. In this example the stall detector 110 comprises a shunt resistor 114. In this example the shunt resistor is connected with the low side transistors of the bridge driver for each of the different phases such that a summation of the currents through the coils can be obtained by measuring the voltage over the shunt resistor 114. In embodiments of the present invention the current detector 113 is adapted for determining the current vector from the measured summation of the currents.

In this example the supply voltage of the bridge driver is VSM. This voltage may be used for determining the amplitude of the voltage vector.

In this example the stall detector 110 comprises an interface for signaling that the motor is stalled. In this example the interface is an interface with the processing device 140. Via the interface stalling information can be passed to the controller 140 which is controlling the bridge driver 130.

Upon reception of a stalling signal the controller may put the bridge outputs to tri-state or set the coils of the motor to the ground or any other pre-defined potential. During normal operation the controller may generate a PWM signal for driving the motor.

In a second aspect embodiments of the present invention relate to a method 200 for detecting stall of a brushless DC motor 120 wherein driving signals are applied such that currents through the one or more coils of the brushless DC motor are generating a flux for driving the motor. An exemplary flow chart of such a method is illustrated in FIG. 2. The brushless DC motor may be a multi-coil motor. A method according to embodiments of the present invention may be driven using different current profiles. Preferable it is sinusoidally driven.

The method comprises determining a direct lead angle 230 between a back EMF voltage vector generated by the motor and a current vector. The current vector represents the flux generated by the currents through the one or more coils of the brushless DC motor. The current vector may be expressed in an axis system which comprises at least two axis.

The method, moreover, comprises determining that the motor is stalling 240 when the direct lead angle exceeds at least one predefined threshold at least once.

The direct lead angle may be obtained in various ways. In embodiments of the present invention the direct lead angle is obtained by first determining the current vector and the voltage vector.

Methods according to embodiments of the present invention may comprise a step 210 for obtaining the current vector which represents the flux generated by the currents through the one or more coils of the brushless DC-motor. This current vector is expressed in an axis system which comprises two or more axis.

Methods according to embodiments of the present invention may comprise a step 220 for obtaining a voltage vector which represents the total of voltages over the coils of the brushless DC-motor. This voltage vector is expressed in the same 2-axis system. The voltage vector may be obtained before or after the current vector.

**Claims**

1. A stall detector (110) for detecting stall of a brushless DC motor (120) which is adapted for applying one or more driving signals such that currents through the one or more coils of the brushless DC motor are generating a flux for driving the motor, the stall detector comprising:

   - a processing device (111) adapted for determining a direct lead angle between a back EMF voltage vector generated by the motor and a current vector which represents the flux generated by the currents through the one or more coils,
   - the processing device (111), moreover, being adapted for determining that the motor is stalling when the direct lead angle exceeds at least one predefined threshold at least once.

2. A stall detector (110) according to claim 1, the stall detector comprising a current detector (113) adapted for obtaining the current vector.

3. A stall detector (110) according to any of the previous claims, the stall detector comprising a voltage detector (112) which is adapted for obtaining a voltage vector.

4. A stall detector (110) according to any of the previous claims, wherein at least two predefined thresholds are defined as the thresholds of a predefined operation region.

5. A stall detector (110) according to any of the previous claims, wherein the current detector (113) comprises a current measurement means (114) for determining the current through the one or more coils and is adapted for determining the current vector from the measured current.

6. A stall detector (110) according to any of the previous claims wherein the processing device (111) is adapted for determining stall only after a pre-defined period after starting the brushless DC-motor.

7. A stall detector (110) according to any of the previous claims, the stall detector (110) comprising an interface for signaling that the motor is stalled.

8. A motor system (100), the motor system (100) comprising a controller (140), a bridge driver (130), a brushless DC motor (120), and a stall detector (110) according to any of the previous claims 1 to 7, the controller (140) is adapted for generating driving signals for controlling the bridge driver (130) such that currents through the one or more coils of the brushless DC motor are generating a flux for driving the motor.

9. A motor system (100), according to claim 8 wherein the controller (140) is adapted for generating pulse width modulated driving signals.

10. A motor system (100), according to any of the claims 8 or 9 wherein the stall detector (110) is adapted for signaling to the controller that the motor is stalled.

11. A motor system (100) according to claim 10, wherein the controller (140) is adapted for putting the bridge outputs to tri-state upon reception of a stall signal from the stall detector.

12. A motor system (100) according to claim 10, wherein the controller (140) is adapted for setting all coils to a same predefined voltage potential.

13. A method (200) for detecting stall of a brushless DC motor (120) wherein driving signals are applied such that currents through the one or more coils of the brushless DC motor are generating a flux for driving the motor, the method comprising:

- determining a direct lead angle (230) between a back EMF voltage generated by the motor and a current vector which represents the flux generated by the currents through the one or more coils,
- determining that the motor is stalling (240) when the direct lead angle exceeds at least one predefined threshold at least once.

14. A method (200) according to claim 13, the method comprising obtaining the current vector (210) and/or obtaining the voltage vector (220).

15. A method (200) according to claim 14 wherein the current vector and/or the voltage vector are obtained by obtaining voltages over the one or more coils and/or by measuring currents through the one or more coils, and by projecting the measured currents and/or voltages onto an axis system with at least two axis.

100

110

111

VSM

130

140

112

120

100

UVW

114

113

**FIG. 1**

200

210  - Obtaining current vector
220  - Obtaining voltage vector

230  - Determining DLA

240  - Determining stall

**FIG. 2**

**FIG. 3**

**FIG. 4**

**FIG. 5**

**FIG. 6**

**FIG. 7**

**FIG. 8**

**FIG. 9**

**FIG. 10**

**EP 3 826 170 A1**

Europäisches Patentamt
European Patent Office
Office européen des brevets

# EUROPEAN SEARCH REPORT

Application Number

EP 19 21 0709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 689 529 A2 (TECHNELEC LTD [GB]) 29 January 2014 (2014-01-29) * paragraph [0001]; claim 1 * * paragraph [0032] - paragraph [0038]; figures 1-4 * * paragraph [0040] - paragraph [0058]; figures 5-8 * * paragraph [0059] - paragraph [0064]; figures 9-10 * ----- | 1-15 | INV. H02P29/024 H02P21/04 H02P21/24 |
| A | US 2016/160782 A1 (PARK JUNG HOON [KR] ET AL) 9 June 2016 (2016-06-09) * claim 5 * ----- | 6 | |
| A | US 2004/032231 A1 (ELLERTHORPE SCOTT [US] ET AL) 19 February 2004 (2004-02-19) * paragraph [0057] * ----- | 6 | |
| A | WO 2010/055168 A2 (TECHNELEC LTD [GB]; POLLOCK CHARLES [GB]; POLLOCK HELEN [GB]) 20 May 2010 (2010-05-20) * the whole document * ----- | 1-15 | TECHNICAL FIELDS SEARCHED (IPC) H02P |

The present search report has been drawn up for all claims

| Place of search | Date of completion of the search | Examiner |
|---|---|---|
| Munich | 15 April 2020 | Landi, Matteo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 19 21 0709

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2020

| Patent document cited in search report | | Publication date | Patent family member(s) | | Publication date |
|---|---|---|---|---|---|
| EP 2689529 | A2 | 29-01-2014 | EP 2689529 A2 | | 29-01-2014 |
| | | | GB 2489434 A | | 03-10-2012 |
| | | | JP 5866429 B2 | | 17-02-2016 |
| | | | JP 2014513911 A | | 05-06-2014 |
| | | | KR 20140024331 A | | 28-02-2014 |
| | | | US 2014084821 A1 | | 27-03-2014 |
| | | | WO 2012131344 A2 | | 04-10-2012 |
| US 2016160782 | A1 | 09-06-2016 | CN 105673180 A | | 15-06-2016 |
| | | | KR 20160069097 A | | 16-06-2016 |
| | | | US 2016160782 A1 | | 09-06-2016 |
| US 2004032231 | A1 | 19-02-2004 | US 6611072 B1 | | 26-08-2003 |
| | | | US 2004032231 A1 | | 19-02-2004 |
| WO 2010055168 | A2 | 20-05-2010 | CN 102282753 A | | 14-12-2011 |
| | | | EP 2359467 A2 | | 24-08-2011 |
| | | | GB 2465379 A | | 19-05-2010 |
| | | | JP 5537565 B2 | | 02-07-2014 |
| | | | JP 2012509056 A | | 12-04-2012 |
| | | | US 2011285332 A1 | | 24-11-2011 |
| | | | WO 2010055168 A2 | | 20-05-2010 |

EPO FORM P0459

For more details about this annex : see Official Journal of the European Patent Office, No. 12/82